# EUROPÄISCHE PATENTANMELDUNG

(11) **EP 4 506 603 A1**
(43) Veröffentlichungstag der Anmeldung: **12.02.2025**
(21) Anmeldenummer: 24193525.3
(22) Anmeldetag: 08.08.2024
(51) Int. Cl.: F16L 21/06, F16L 37/138, F16L 13/14

(54) **ROHRVERBINDER ZUM DICHTEN VERBINDEN ZWEIER ROHRENDEN, VERWENDUNG DESSELBEN UND VERFAHREN**

(30) Priorität: 09.08.2023 DE 102023121236
(71) Anmelder: Viega Technology GmbH & Co. KG, 57439 Attendorn (DE)
(72) Erfinder: MÜLLER, Andreas, 57258 Freudenberg (DE); SCHRÖDER, Klaus, 57439 Attendorn (DE); RIILI, Nadine, 57368 Lennestadt (DE); BOHR, Karsten, 57439 Attendorn (DE); KAUFMANN, Natascha, 57439 Attendorn (DE)
(74) Vertreter: Cohausz & Florack

(57) **Zusammenfassung**

Die Erfindung betrifft einen Rohrverbinder (100, 200, 300) zum dichten Verbinden eines ersten Rohrendes (4) mit einem zweiten Rohrende (6), mit einem hülsenartigen Grundkörper (102, 202), der eine erste Aufnahme (104, 204) zum Einführen eines ersten Rohrendes (4) und eine zweite Aufnahme (106, 206) zum Einführen eines zweiten Rohrendes (6) aufweist, mit ersten Halteelementen (116, 216) im Bereich der ersten Aufnahme (104, 204), die dazu ausgebildet sind, ein in die erste Aufnahme (104, 204) eingeführtes erstes Rohrende (4) nach einem Verpressen des Rohrverbinders (100, 200, 300) in der ersten Aufnahme (104, 204) zu fixieren, und mit zweiten Halteelementen (120, 220) im Bereich der zweiten Aufnahme (106, 206), die dazu ausgebildet sind, ein in die zweite Aufnahme (106, 206) eingeführtes zweites Rohrende (6) nach dem Verpressen des Rohrverbinders (100, 200, 300) in der zweiten Aufnahme (106, 206) zu fixieren, wobei ein oder mehrere Brückenhalteelemente (114, 214) vorgesehen sind, wobei sich ein Brückenhalteelement (114, 214) jeweils vom Bereich der ersten Aufnahme (104, 204) zum Bereich der zweiten Aufnahme (106, 206) erstreckt und mindestens eines der ersten Halteelemente (116, 216) und mindestens eines der zweiten Halteelemente (120, 220) bildet. Die Erfindung betrifft weiter eine Verwendung des Rohrverbinders (100, 200, 300) sowie ein Verfahren zum dichten Verbinden eines ersten Rohrendes (4) mit einem zweiten Rohrende (6).

## Beschreibung

Die vorliegende Erfindung betrifft einen Rohrverbinder zum dichten Verbinden eines ersten Rohrendes mit einem zweiten Rohrende, mit einem hülsenartigen Grundkörper, der eine erste Aufnahme zum Einführen eines ersten Rohrendes und eine zweite Aufnahme zum Einführen eines zweiten Rohrendes aufweist, mit ersten Halteelementen im Bereich der ersten Aufnahme, die dazu ausgebildet sind, ein in die erste Aufnahme eingeführtes erstes Rohrende nach einem Verpressen des Rohrverbinders in der ersten Aufnahme zu fixieren, und mit zweiten Halteelementen im Bereich der zweiten Aufnahme, die dazu ausgebildet sind, ein in die zweite Aufnahme eingeführtes zweites Rohrende nach dem Verpressen des Rohrverbinders in der zweiten Aufnahme zu fixieren. Die vorliegende Erfindung betrifft weiter eine Verwendung des Rohrverbinders sowie ein Verfahren zum dichten Verbinden eines ersten Rohrendes mit einem zweiten Rohrende.

Aus dem Stand der Technik sind verschiedene Rohrverbinder bekannt, um Kunststoffrohre, insbesondere erdverlegte Versorgungsleitungen, wie zum Beispiel kommunale Trinkwasser- oder Gasversorgungsleitungen, zu verbinden.

Bekannt sind zum Beispiel Rohrverbinder mit integrierten Heizwendeln, die mittels Heizwendelschweißen stoffschlüssig mit den Rohrenden verbunden werden. Derartige Rohrverbinder ermöglichen langlebige, dichte Verbindungen. Die Herstellung der stoffschlüssigen Verbindung benötigt jedoch sehr lange Schweiß- und Abkühlzeiten, was zu einem hohen Installationsaufwand führt.

Weiterhin sind Rohrverbinder in Form von Pressverbindern bekannt, die mittels eines Presswerkzeugs mit den Rohrenden verpresst werden, zum Beispiel aus der DE 10 2016103 546 A1.

Darüber hinaus sind als Steckverbinder ausgebildete Rohrverbinder bekannt, die zum Beispiel ein in einer Muffe angeordnetes Ringelement mit federgelagerten Haltezähnen aufweisen, die ein in die Muffe durch das Ringelement eingestecktes Rohrende fixieren.

Um eine zuverlässige Dichtheit der Pressverbindungen zu gewährleisten, müssen die Pressverbindungen auch radialen und axial auftretenden Kräften standhalten können.

Bekannte Pressverbinder übertragen radiale und axial auftretende Kräfte in der Regel über ein hülsenartiges Gehäusebauteil, welches die äußere Hülle des Pressverbinders bildet. Gerade die Übertragung von axial wirkenden Kräften erfordert meist recht große notwendige Wandstärken dieses Bauteils, um eine entsprechend ausreichende Druck- und Zugfestigkeit zu gewährleisten und normativen Vorschriften zu genügen, beispielsweise die Bauteilspannungen im zugelassenen Bereich zu halten. Dies gilt insbesondere für Pressverbinder aus nicht-metallischem Werkstoff, insbesondere Kunststoff. Gleichzeitig sind Bauteile aus Kunststoff mit großen Wanddicken jedoch fast nicht oder nur sehr schwer plastisch kalt zu verformen, was eine Kaltumformung durch ein Presswerkzeug, wie sie zum Beispiel von metallischen Pressverbindern für Rohre bekannt ist, sehr aufwendig gestalten würde. Darüber hinaus sind Pressverbinder mit großen Wanddicken aufgrund der geringen Toleranzen typischerweise nicht im Spritzguss und nur aufwändig durch mechanische Bearbeitung herstellbar.

Bekannt sind weiter Rohrverbinder mit Innenstützkörpern, wie zum Beispiel aus der DE 10 2011 112 050 A1. Derartige Rohrverbinder ermöglichen grundsätzlich zuverlässige und langlebige Rohrverbindungen, stellen jedoch zum Teil höhere Anforderungen an eine Kalibrierung der Rohrenden, um die Rohrenden zwischen Innenstützkörper und Rohrverbindergehäuse einführen zu können. Darüber hinaus kann das Einführen eines Rohrendes in einen solchen Rohrverbinder gerade unter beengten Verhältnissen bei zum Beispiel Erdverlegungsarbeiten schwieriger sein als bei Rohrverbindern ohne Innenstützkörpern. Auftretende axiale Zugkräfte werden bei dem Rohrverbinder aus der DE 10 2011 112 050 A1 zudem im Wesentlichen über das Gehäuse des Rohrverbinders übertragen, was wie oben erläutert größere notwendige Wandstärken bedingt.

Vor diesem Hintergrund liegt der vorliegenden Erfindung die Aufgabe zu Grunde, einen Rohrverbinder zum dichten Verbinden zweier Rohrenden, insbesondere zweier Kunststoffrohre, zur Verfügung zu stellen, der sich einfach installieren lässt, insbesondere an erdverlegten Versorgungsleitungen, und eine zuverlässige und langlebige dichte Verbindung ermöglicht.

Vorzugsweise soll der Rohrverbinder eine schnelle und sichere Verbindungstechnik bei wirtschaftlichem Materialeinsatz bei gut handhabbarem Gewicht und handhabbarer Größe ermöglichen. Weiterhin soll der Rohrverbinder vorzugsweise kalt zu verarbeiten, insbesondere zu verpressen, und robust gegen Baustellenbedingungen, insbesondere bei Erdverlegung, sein.

Die zuvor genannte Aufgabe wird erfindungsgemäß gelöst durch einen Rohrverbinder zum dichten Verbinden eines ersten Rohrendes mit einem zweiten Rohrende, mit einem hülsenartigen Grundkörper, der eine erste Aufnahme zum Einführen eines ersten Rohrendes und eine zweite Aufnahme zum Einführen eines zweiten Rohrendes aufweist, mit ersten Halteelementen im Bereich der ersten Aufnahme, die dazu ausgebildet sind, ein in die erste Aufnahme eingeführtes erstes Rohrende nach einem Verpressen des Rohrverbinders in der ersten Aufnahme zu fixieren, und mit zweiten Halteelementen im Bereich der zweiten Aufnahme, die dazu ausgebildet sind, ein in die zweite Aufnahme eingeführtes zweites Rohrende nach dem Verpressen des Rohrverbinders in der zweiten Aufnahme zu fixieren, wobei ein oder mehrere Brückenhalteelemente vorgesehen sind, wobei sich ein Brückenhalteelement jeweils vom Bereich der ersten Aufnahme zum Bereich der zweiten Aufnahme erstreckt und mindestens eines der ersten Halteelemente und mindestens eines der zweiten Halteelemente bildet.

Auf diese Weise wird ein Rohrverbinder zur Verfügung gestellt, der sich einfach durch Verpressen installieren lässt und auch beim Auftreten von radialen und/oder axialen Kräften eine langlebige dichte Rohrverbindung ermöglicht.

Mit den ein oder mehreren Brückenhalteelemente, die sich jeweils vom Bereich der ersten Aufnahme zum Bereich der zweiten Aufnahme erstrecken und mindestens eines der ersten Halteelemente und mindestens eines der zweiten Halteelemente bilden, werden im Rohrverbinder insbesondere gesonderte Bauteile zur Verfügung gestellt, die beide Rohrenden, mit anderen Worten die beiden Fügepartner, überspannen und die über die ersten und zweiten Halteelemente des jeweiligen Brückenhalteelements auftretende axialen Kräfte aufnehmen und von einem Rohrende auf das andere Rohrende übertragen können, ohne dass es zu Undichtigkeiten an der Rohrverbindung kommt. Dadurch dass die axialen Kräfte über die ein oder mehreren Brückenhalteelemente übertragen werden, müssen diese Kräfte nicht vom Grundkörper aufgenommen und übertragen werden, so dass sich dieser wiederum mit geringeren Wanddicken realisieren lässt. Auf diese Weise wird eine Funktionstrennung von der Sicherung gegen auftretende axiale Kräfte durch die Brückenhalteelemente und der strukturellen Integrität des Pressverbinders durch den Grundkörper, insbesondere auch als Berstsicherung radial nach außen gegen den Innendruck des durch die Rohrenden fließenden Mediums, bewirkt. Dadurch kann ein Rohrverbinder mit geringerem Materialverbrauch, schlankerem Aufbau und somit weniger Platzbedarf zur Verfügung gestellt werden.

Die geringere erforderliche Wanddicke des Grundkörpers ermöglicht auch eine kostengünstigere Herstellung des Grundkörpers, zum Beispiel durch Spritzguss. Weiterhin verkürzt sich durch geringere erforderliche Wanddicken die Auskühlzeit bei der Herstellung des Grundkörpers.

Die ein oder mehreren Brückenhalteelemente bestehen vorzugsweise aus einem anderen Material als der Grundkörper, beispielsweise aus einem anderen Kunststoff oder aus Metall. Für die ein oder mehreren Brückenhalteelemente kann insbesondere ein für die Übertragung auftretender, axialer Kräfte geeignetes Material gewählt werden, während für den Grundkörper insbesondere ein für die Kaltverformung beim Verpressen geeignetes Material gewählt werden kann.

Der Rohrverbinder dient zum dichten Verbinden eines ersten Rohrendes mit einem zweiten Rohrende. Bei den Rohrenden kann es sich insbesondere um Rohrenden von Rohren aus einem nachgiebigen Werkstoff, insbesondere aus Kunststoff handeln. Vorzugsweise ist der Rohrverbinder für Kunststoffrohre für erdverlegte Versorgungsleitungen, insbesondere erdverlegte Gas- oder Trinkwasserversorgungsleitungen ausgelegt.

Das Verbinden des Rohrverbinders mit dem ersten und zweiten Rohrende erfolgt durch Verpressen, insbesondere mittels eines Presswerkzeugs. Bei dem Rohrverbinder handelt es sich also um einen Pressverbinder, der zum dichten Verbinden eines ersten Rohrendes mit einem zweiten Rohrende dazu ausgebildet ist, mit einem ersten in die erste Aufnahme eingeführten Rohrende und mit einem zweiten in die zweite Aufnahme eingeführten Rohrende verpresst zu werden.

Das Verpressen erfolgt insbesondere unter Kaltverformung des Grundkörpers. Gegenüber Scharnierpressverbindern, bei denen zwei oder mehrere durch Scharniere verbundene Gehäusesegmente beim Verpressen zueinander verschwenkt werden, ohne dass eine nennenswerte Kaltverformung der Gehäusesegmente erfolgt, kann durch die Kaltverformung des Grundkörpers eine in Umfangsrichtung gleichmäßigere radiale Presskraft auf die Halteelemente und/oder die Rohrenden ausgeübt werden, so dass eine stabile und dichte Verbindung zwischen Rohrverbinder und Rohrende erreicht werden kann, insbesondere auch ohne Innenstützkörper.

Der Rohrverbinder bewirkt daher vorzugsweise eine Fixierung und Abdichtung zum ersten und zweiten Rohrende von außen, insbesondere ohne Innenstützkörper. Entsprechend weist der Rohrverbinder vorzugsweise keinen Innenstützkörper auf.

Der Rohrverbinder ist besonders vorteilhaft für größere Rohrquerschnitte, da diese bei der Erdverlegung häufig zur Anwendung kommen und der Vorteil des Rohrverbinders, eine geringere Wanddicke für den Grundkörper wählen zu können, besonders bei Rohrverbindern für größere Rohrquerschnitte zum Tragen kommt. Daher ist der Rohrverbinder vorzugsweise zum dichten Verbinden von Rohrenden von Rohren mit einem Außendurchmesser von d25 (Außendurchmesser 25 mm) oder mehr, beispielsweise d25-225 (Außendurchmesser 25 - 225 mm), insbesondere von d32 (Außendurchmesser 32 mm) oder mehr, beispielsweise d32-225 (Außendurchmesser 32 - 225 mm), ausgebildet.

Der Rohrverbinder weist einen Grundkörper auf. Der Grundkörper kann einteilig oder mehrteilig ausgebildet sein. Vorzugsweise ist der Grundkörper aus Kunststoff. Auf diese Weise kann ein Rohrverbinder mit geringen Materialkosten und geringem Gewicht zur Verfügung gestellt werden.

Der Grundkörper ist hülsenartig und weist eine erste Aufnahme zum Einführen eines ersten Rohrendes und eine zweite Aufnahme zum Einführen eines zweiten Rohrendes auf. Die erste und zweite Aufnahme liegen vorzugsweise einander gegenüber, so dass das erste und das zweite Rohrende von gegenüberliegenden Seiten des Grundkörpers in die jeweilige erste und zweite Aufnahme des Grundkörpers einführbar sind. Die erste und die zweite Aufnahme bilden mit einem optionalen dazwischen angeordneten Übergangsbereich einen durchgehenden Kanal durch den Grundkörper, so dass das erste und zweite Rohrende durch den Rohrverbinder in fluidleitender Weise miteinander verbunden werden können. Die erste und die zweite Aufnahme können so ausgestaltet sein, dass das erste und das zweite Rohrende nach deren Einführen auf Stoß aneinander anliegen. Weiterhin können im Grundkörper auch ein oder mehrere Anschlagsflächen vorgesehen sein, an denen ein in die erste und/oder die zweite Aufnahme eingeführtes jeweiliges Rohrende zur Anlage kommt, so dass das erste und das zweite Rohrende nach deren Einführen in die jeweilige Aufnahme zueinander beabstandet sind, insbesondere einen durch die ein oder mehreren Anschlagsflächen vorgegebenen Abstand zueinander aufweisen.

Der Rohrverbinder weist erste Halteelemente im Bereich der ersten Aufnahme auf, die dazu ausgebildet sind, ein in die erste Aufnahme eingeführtes erstes Rohrende nach einem Verpressen des Rohrverbinders in der ersten Aufnahme zu fixieren. Die ersten Halteelemente können beispielsweise in Form von ein oder mehreren Schneiden, beispielsweise in Form von Schneidzähnen, am Rohrverbinder ausgebildet sein, die beim Verpressen des Rohrverbinders in die Außenfläche des ersten Rohrendes eingeformt werden und das erste Rohrende auf diese Weise formschlüssig in der ersten Aufnahme fixieren.

Der Rohrverbinder weist weiter zweite Halteelemente im Bereich der zweiten Aufnahme auf, die dazu ausgebildet sind, ein in die zweite Aufnahme eingeführtes zweites Rohrende nach einem Verpressen des Rohrverbinders in der ersten Aufnahme zu fixieren. Die zweiten Halteelemente können beispielsweise in Form von ein oder mehreren Schneiden, beispielsweise in Form von Schneidzähnen, am Rohrverbinder ausgebildet sein, die beim Verpressen des Rohrverbinders in die Außenfläche des zweiten Rohrendes eingeformt werden und das zweite Rohrende auf diese Weise formschlüssig in der zweiten Aufnahme fixieren.

Die ersten und zweiten Halteelemente sind entsprechend vorzugsweise dazu ausgebildet, das erste bzw. zweite Rohrende nach dem Verpressen formschlüssig in der jeweiligen Aufnahme zu fixieren.

Bei dem Rohrverbinder sind ein oder mehrere Brückenhalteelemente vorgesehen, wobei sich ein Brückenhalteelement jeweils vom Bereich der ersten Aufnahme zum Bereich der zweiten Aufnahme erstreckt und mindestens eines der ersten Halteelemente und mindestens eines der zweiten Halteelemente bildet.

Ein Brückenhalteelement bildet demnach sowohl ein erstes Halteelement zur Fixierung des ersten Rohrendes in der ersten Aufnahme als auch ein zweites Halteelement zur Fixierung des zweiten Rohrendes in der zweiten Aufnahme. Zu diesem Zweck erstreckt sich das Brückenhalteelement vom Bereich der ersten Aufnahme zum Bereich der zweiten Aufnahme und überspannt damit das erste und das zweite Rohrende, so dass axiale Kräfte, insbesondere axiale Zugkräfte, von einem zum anderen Rohrende über das Brückenhalteelement übertragen werden.

Entsprechend erstreckt sich das Brückenhalteelement insbesondere zugkraftübertragend vom Bereich der ersten Aufnahme zum Bereich der zweiten Aufnahme. Zu diesem Zweck ist das Brückenhalteelement vorzugsweise einteilig ausgebildet. Das Brückenhalteelement kann auch mehrteilig ausgebildet sein, wenn die Brückenhalteelementteile, aus denen das mehrteilige Brückenhalteelement gebildet ist, so miteinander verbunden sind, dass das Brückenhalteelement Zugkräfte von den ersten zu den zweiten Halteelementen des Brückenhalteelements und/oder umgekehrt übertragen kann.

Vorzugsweise sind mehrere, zum Beispiel mindestens vier oder mindestens sechs, Brückenhalteelemente vorgesehen, die weiter bevorzugt über den Innenumfang des Grundkörpers verteilt angeordnet sind. Auf diese Weise kann eine axiale Kraftübertragung gleichmäßig auf den Umfang des Rohrverbinders verteilt werden, so dass Scherkräfte reduziert werden.

Neben den ein oder vorzugsweise mehreren Brückenhalteelementen kann der Rohrverbinder optional auch noch zusätzliche erste und/oder zweite Halteelemente aufweisen, die keinem Brückenhalteelement zugeordnet sind.

Die zuvor genannte Aufgabe wird erfindungsgemäß weiterhin gelöst durch die Verwendung des zuvor beschriebenen Rohrverbinders oder einer Ausführungsform davon zum Verbinden eines ersten Rohrendes und eines zweiten Rohrendes, insbesondere von Rohren aus nachgiebigem Werkstoff, vorzugsweise Kunststoffrohren.

Wie zuvor beschrieben eignet sich der Rohrverbinder insbesondere zum dichten Verbinden von erdverlegten Versorgungsleitungen, wie erdverlegten Gas- oder Trinkwasserversorgungsleitungen. Entsprechend handelt es sich bei den Rohren vorzugsweise um Kunststoffrohre für erdverlegte Gas- oder Trinkwasserversorgungsleitungen.

Wie ebenfalls zuvor beschrieben, eignet sich der Rohrverbinder insbesondere für größere Rohrquerschnitte. Entsprechend handelt es sich bei den Rohren vorzugsweise um Rohre mit einem Außendurchmesser von d25 oder mehr, beispielsweise d25-225, insbesondere von d32 oder mehr, beispielsweise d32-225.

Die zuvor genannte Aufgabe wird erfindungsgemäß weiterhin gelöst durch ein Verfahren zum dichten Verbinden eines ersten Rohrendes mit einem zweiten Rohrende, bei dem ein erstes Rohrende in die erste Aufnahme des zuvor beschriebenen Rohrverbinders oder einer Ausführungsform davon eingeführt wird, bei dem ein zweites Rohrende in die zweite Aufnahme des Rohrverbinders eingeführt wird und bei dem der Rohrverbinder derart verpresst wird, dass das erste Rohrende durch die ersten Halteelemente in der ersten Aufnahme fixiert wird, insbesondere formschlüssig, und das zweite Rohrende durch die zweiten Halteelemente in der zweiten Aufnahme fixiert wird, insbesondere formschlüssig.

Der Rohrverbinder wird vorzugsweise mit einem Presswerkzeug verpresst. Bei der Verpressung wird der Grundkörper vorzugsweise kalt verformt, so dass die ersten Halteelemente in die Außenfläche des ersten Rohrendes und die zweiten Halteelemente in die Außenfläche des zweiten Rohrendes eingeformt werden.

Das Verpressen des Rohrverbinders im Bereich der ersten Aufnahme und im Bereich der zweiten Aufnahme kann gleichzeitig erfolgen. Weiterhin ist es denkbar, dass der

Rohrverbinder zunächst im Bereich einer Aufnahme, beispielsweise der ersten Aufnahme, und danach im Bereich der anderen Aufnahme, beispielsweise der zweiten Aufnahme, verpresst wird.

Im Folgenden werden verschiedene Ausführungsformen des Rohrverbinders, der Verwendung und des Verfahrens beschrieben, wobei die einzelnen Ausführungsformen jeweils unabhängig voneinander für den Rohrverbinder, die Verwendung und das Verfahren gelten. Darüber hinaus können die einzelnen Ausführungsformen beliebig miteinander kombiniert werden.

Bei einer Ausführungsform wird der Grundkörper aus mehreren in Umfangsrichtung nebeneinander angeordneten Grundkörpersegmenten gebildet. Durch einen solchen segmentierten Aufbau des Grundkörpers kann beim Verpressen eine gleichmäßigere Kraftverteilung erreicht werden, so dass sich der Innendurchmesser des Grundkörpers beim Verpressen gleichmäßig verjüngt und die Halteelemente der vorzugsweise mehreren Brückenhalteelemente gleichmäßiger, insbesondere gleichmäßiger über den Umfang, in die Außenflächen des ersten und zweiten Rohrendes eingeformt werden. Insbesondere kann auf diese Weise ein homogenes Einformen der ersten und/oder zweiten Halteelemente über den Umfang des ersten bzw. zweiten Rohrendes erreicht werden, wodurch eine gleichmäßige und geradlinige Montage erreicht wird.

Für ein gleichmäßiges Verpressen über den Umfang wird der Grundkörper vorzugsweise aus mindestens vier, weiter bevorzugt mindestens sechs, besonders bevorzugt aus mindestens acht in Umfangsrichtung nebeneinander angeordneten Grundkörpersegmenten gebildet. Bei N Grundkörpersegmenten bildet jedes Grundkörpersegment vorzugsweise den N-ten Teil des Umfangs des hülsenartigen Grundkörpers. Ein Grundkörpersegment umfasst insbesondere einen ersten Abschnitt, der zusammen mit den übrigen Grundkörpersegmenten die erste Aufnahme umgibt, und einen zweiten Abschnitt, der zusammen mit den übrigen Grundkörpersegmenten die zweite Aufnahme umgibt.

Vorzugsweise wird der Grundkörper aus im Wesentlichen gleichartigen Grundkörpersegmenten gebildet. Auf diese Weise können die Herstellungskosten gesenkt werden.

Im verpressten Zustand fördert der segmentierte Aufbau des Grundkörpers eine Krafteinleitung über die ersten oder zweiten Halteelemente in die Brückenhalteelemente, so dass axiale Kräfte von einem Rohrende über das entsprechende Halteelement auf die Brückenhalteelemente und von diesem über das jeweilige andere Halteelement auf das jeweilige andere Rohrende übertragen werden.

Die Grundkörpersegmente sind vorzugsweise als einzelne Elemente ausgebildet, d.h. untereinander stofflich unverbunden. Auf diese Weise können die Elemente separat voneinander hergestellt und anschließend zum Grundkörper zusammengesetzt werden. Insbesondere lassen sich einzelne Grundkörpersegmente einfacher und schneller herstellen, beispielsweise im Spritzguss, als eine einteilige Hülse.

Es ist weiterhin denkbar, dass dieselbe Form von Grundkörpersegmenten für verschiedene Nennweiten einsetzbar ist, indem für Grundkörper unterschiedlicher Nennweiten unterschiedliche Anzahlen von Grundkörpersegmenten verwendet werden. Auf diese Weise lassen sich Produktions- und/oder Lagerhaltungskosten reduzieren.

Die Grundkörpersegmente sind vorzugsweise so ausgestaltet und zueinander angeordnet, dass im unverpressten Zustand Zwischenräume zwischen den Grundkörpersegmenten bestehen, die beim Verpressen teilweise oder vollständig geschlossen werden. Auf diese Weise wird das Verpressen der Grundkörpersegmente erleichtert.

Die Grundkörpersegmente können form- und/oder kraftschlüssig untereinander verbunden sein, beispielsweise mittels Nut-Feder-Verbindungen und/oder

Rastverbindungen. Auf diese Weise können die richtige Positionierung und/oder Ausrichtung der Grundkörpersegmente zueinander unterstützt werden, insbesondere im unverpressten Zustand. Die Grundkörpersegmente oder einige der Grundkörpersegmente können auch untereinander unverbunden sein.

Der Grundkörper setzt sich demnach vorzugsweise aus mehreren, insbesondere einzelnen, Grundkörpersegmenten zusammen. Die Mehrzahl dieser Grundkörpersegmente ergibt dann in Summe die Mantelfläche des Grundkörpers.

Es ist auch denkbar, dass einige der Grundkörpersegmente, beispielsweise jeweils zwei oder mehr nebeneinander angeordnete Grundkörpersegmente, oder auch alle Grundkörpersegmente stofflich, beispielsweise mittels Stegen oder Filmscharnieren, oder stoffschlüssig, beispielsweise mittels Klebestellen, untereinander verbunden sind. Auf diese Weise können die richtige Positionierung und/oder Ausrichtung der Grundkörpersegmente zueinander unterstützt werden, insbesondere im unverpressten Zustand.

Wenn mehrere der Grundkörpersegmente untereinander stofflich und/oder stoffschlüssig verbunden sind, weist die stoffliche und/oder stoffschlüssige Verbindung dieser Grundkörpersegmente untereinander vorzugsweise eine geringere, insbesondere deutlich geringere, Wandstärke auf als die Grundkörpersegmente selbst, vorzugsweise eine Wandstärke von weniger als 3 mm, insbesondere weniger als 1 mm. Auf diese Weise behindern die stofflichen und/oder stoffschlüssigen Verbindungen nicht den Verpressvorgang. Zudem bestehen auch zwischen untereinander stofflich und/oder stoffschlüssig verbundenen Grundkörpersegmenten im unverpressten Zustand vorzugsweise Zwischenräume, die beim Verpressen teilweise oder vollständig geschlossen werden.

Bei einer Ausführungsform weisen ein oder mehrere der Grundkörpersegmente Ausrichtungsmittel auf, um benachbarte Grundkörpersegmente zueinander auszurichten, insbesondere im unverpressten Zustand. Auf diese Weise werden die Grundkörpersegmente in einer definierten Position zueinander gehalten. Zudem wird die Montage des Rohrverbinders bei der Herstellung erleichtert.

Die Grundkörpersegmente können beispielsweise zueinander korrespondierende Nut- und Feder-Verbindungsmittel aufweisen, so dass die Feder eines Grundkörpersegments, insbesondere im unverpressten Zustand, in die korrespondierende Nut eines benachbarten Grundkörpersegments eingreift.

Bei einer Ausführungsform weisen ein oder mehrere der Grundkörpersegmente ein oder mehrere Aufnahmen für ein jeweiliges Brückenhalteelement auf. Auf diese Weise können die einzelnen Brückenhalteelemente sicher an ihrer jeweiligen Umfangsposition positioniert werden, wodurch die Robustheit des Rohrverbinders bei in Umfangsrichtung auftretenden Kräften verbessert wird.

Die Grundkörpersegmente und/oder die Brückenhalteelemente können Rastmittel aufweisen, um ein Brückenhalteelement in der jeweiligen Aufnahme zu fixieren. Auf diese Weise kann ein unerwünschtes Lösen der Brückenhalteelemente im unverpressten Zustand verhindert werden.

Ein Grundkörpersegment kann eine Aufnahme oder mehrere, beispielsweise zwei, in Umfangsrichtung nebeneinander angeordnete Aufnahmen aufweisen.

Die Grundkörpersegmente nehmen demnach vorzugsweise die jeweiligen Brückenhalteelemente mit den ersten und zweiten Halteelementen auf.

Bei einer Ausführungsform weist der Rohrverbinder ein den Grundkörper zumindest teilweise umgebendes, vorzugsweise hülsenartiges, Gehäuse auf, wobei das Gehäuse eine erste Gehäuseöffnung zum Einführen eines ersten Rohrendes in die erste Aufnahme und eine zweite Gehäuseöffnung zum Einführen eines zweiten Rohrendes in die zweite Aufnahme aufweist. Vorzugsweise ist das Gehäuse schalenartig um den Grundkörper angeordnet.

Das Gehäuse kann radiale Kräfte aufnehmen und auf diese Weise den Berstschutz des Rohrverbinders verbessern. Weiterhin kann das Gehäuse den Grundkörper im verpressten Zustand fixieren, so dass ein Lösen des Rohrverbinders aus dem verpressten Zustand verhindert wird.

Besteht der Grundkörper aus mehreren Grundkörpersegmenten, so kann das Gehäuse zudem die richtige Ausrichtung der Grundkörpersegmente, insbesondere im unverpressten Zustand, sicherstellen.

Das Gehäuse kann insbesondere mehrere Gehäuseteile aufweisen, insbesondere mehrere in Bezug auf den hülsenförmigen Grundkörper axial zueinander angeordnete Gehäuseteile aufweisen.

Wie zuvor ausgeführt wird der Grundkörper vorzugsweise aus mehreren Grundkörpersegmenten gebildet. Die Grundkörpersegmente werden vorzugsweise durch die Gehäuseteile fixiert, wobei die Gehäuseteile weiter bevorzugt schalenförmig von außen über die Grundkörpersegmente aufgeschoben sind.

Die Gehäuseteile oder Abschnitte davon weisen im unverpressten Zustand vorzugsweise einen, insbesondere axialen, Abstand zueinander auf, der beim Verpressen des Rohrverbinders reduziert wird. Auf diese Weise kann das Gehäuse den Rohrverbinder im verpressten Zustand fixieren.

Das Gehäuse kann aus Metall oder, vorzugsweise, aus Kunststoff bestehen. Insbesondere können die Gehäuseteile durch Spritzguss hergestellt sein, vorzugsweise mit verstärkenden Einlageelementen, zum Beispiel Metallringen, zur Verstärkung des Berstschutzes durch das Gehäuse und/oder zur Übertragung der Presskraft auf den Grundkörper.

Bei einer Ausführungsform weist das Gehäuse mehrere Gehäuseteile auf, die zu jeweiligen Pressflächen des Grundkörpers korrespondierende Gleitflächen aufweisen, so dass eine mittels eines Presswerkzeugs auf die Gehäuseteile ausgeübte axiale Presskraft eine radiale Presskraft auf den Grundkörper bewirkt. Auf diese Weise kann eine auf das Gehäuse ausgeübte axiale Presskraft zumindest teilweise in eine radiale Presskraft umgewandelt werden, durch die der Grundkörper radial nach Innen verpresst wird, so dass die Halteelemente der Brückenhalteelemente in die Außenfläche der jeweiligen Rohrenden eingeformt werden.

Vorzugsweise weist das Gehäuse ein erstes und ein zweites Gehäuseteil auf, wobei das erste Gehäuseteil im Bereich der ersten Aufnahme und das zweite Gehäuseteil im Bereich der zweiten Aufnahme angeordnet wird.

Die Pressflächen des Grundkörpers und die korrespondierenden Gleitflächen der Gehäuseteile sind vorzugsweise schräg zur axialen Achse des Grundkörpers ausgerichtet. Beispielsweise kann der Grundkörper im Bereich der ersten und/oder zweiten Aufnahme eine jeweilige kegelstumpfflächenartige Pressfläche bilden, die zum Beispiel aus jeweiligen Teilpressflächen der einzelnen Grundkörpersegmente gebildet werden kann. Das Gehäuse kann entsprechend ein erste und zweites Gehäuseteil mit einer jeweiligen zu der jeweiligen kegelstumpfflächenartigen Pressfläche korrespondierenden Gleitfläche aufweisen. Auf diese Weise wird beim Verpressen eine gleichmäßige Kraftverteilung der radialen Presskraft in Umfangsrichtung erreicht.

Wie zuvor ausgeführt wird der Grundkörper vorzugsweise aus mehreren Grundkörpersegmenten gebildet. Durch axiales Verschieben der Gehäuseteile mit einem Presswerkzeug, wodurch die beiden Gehäuseteile entlang der Achse der Rohrverbinders aufeinander zu bewegt werden, werden dann die Grundkörpersegmente zur Achse des Rohrverbinders (bzw. der Rohrenden) hinbewegt und der Querschnitt über die schrägen zueinander verschiebbaren Gleit- und Pressflächen reduziert, so dass die einzelnen Halteelemente der Brückenhalteelemente und das vorzugsweise vorhandene Dichtelement radial auf die jeweiligen Rohrenden aufgebracht werden.

Bei einer Ausführungsform weisen die Gehäuseteile untereinander zueinander korrespondierende Rastmittel auf, um die Gehäuseteile im verpressten Zustand miteinander zu verrasten, insbesondere in einer Verpressposition. Zusätzlich oder alternativ können die Gehäuseteile und der Grundkörper zueinander korrespondierende Rastmittel aufweisen, um die Gehäuseteile im verpressten Zustand zu verrasten, insbesondere in einer Verpressposition. Auf diese Weise kann ein unbeabsichtigtes Bewegen der Gehäuseteile aus der Verpressposition verhindert werden. Dadurch kann das Gehäuse insbesondere auch den Grundkörper zuverlässig im verpressten Zustand fixieren.

Die Gehäuseteile können beispielsweise zueinander korrespondierende Rasthaken und Rasthinterschneidungen aufweisen, um die Gehäuseteile im verpressten Zustand des Rohrverbinders miteinander in der Verpressposition zu verrasten.

Zusätzlich oder alternativ können die Gehäuseteile auch zueinander korrespondierende Rastmittel aufweisen, um die Gehäuseteile im unverpressten Zustand des Rohrverbinders miteinander zu verrasten, insbesondere in einer Ausgangsposition zueinander zu halten. Zusätzlich oder alternativ können die Gehäuseteile und der Grundkörper zueinander korrespondierende Rastmittel aufweisen, um die Gehäuseteile im unverpressten Zustand zu verrasten, insbesondere in einer Ausgangsposition zueinander zu halten. Auf diese Weise kann ein unerwünschtes Lösen der Gehäuseteile vom übrigen Rohrverbinder im unverpressten Zustand verhindert werden.

Insbesondere kann der Grundkörper vorzugsweise aus mehreren Grundkörpersegmenten gebildet sein, wobei die Grundkörpersegmente vorzugsweise durch die Gehäuseteile fixiert werden, indem die Gehäuseteile weiter bevorzugt schalenförmig von außen über die Grundkörpersegmente aufgeschoben sind, bis sie in einer Ausgangsposition einrasten.

Bei einer Ausführungsform ist eine Verpresst-Kennzeichnung vorgesehen, die den verpressten Zustand des Rohrverbinders anzeigt. Bei der Verpresst-Kennzeichnung kann es sich beispielsweise um eine farbliche Kennzeichnung an einem der Gehäuseteile im Bereich der korrespondierenden Rastmittel handeln, die beispielsweise im unverpressten Zustand von außen sichtbar und im verpressten Zustand von außen nicht sichtbar ist, vorzugsweise von dem anderen Gehäuseteil, insbesondere dessen Rastmitteln, überdeckt wird.

Bei einer Ausführungsform weisen die ein oder mehreren Brückenhalteelemente eine höhere Zugfestigkeit und/oder höhere Streckgrenze auf als der Grundkörper. Auf diese Weise können die Brückenhalteelemente Zugkräfte besser aufnehmen und geringere Wanddicken aufweisen.

Insbesondere können die Brückenhalteelemente aus einem Metall oder aus einem Verbundwerkstoff, beispielsweise faserverstärktem Kunststoff, bestehen.

Unter der Zugfestigkeit wird die Zugfestigkeit Rₘ, gemessen nach ISO 6892 für metallische Werkstoffe und nach ISO 527 für Kunststoffe und Verbundwerkstoffe, verstanden. Unter der Streckgrenze wird die Dehngrenze, insbesondere R_{p0,2}, gemessen nach ISO 6892 für metallische Werkstoffe und nach ISO 527 für Kunststoffe und Verbundwerkstoffe, verstanden.

Bei einer Ausführungsform sind die ein oder mehreren Brückenhalteelemente einteilig ausgebildet. Auf diese Weise können die Axialkräfte besonders gut übertragen werden.

Bei einer Ausführungsform weisen die ein oder mehreren Brückenhalteelemente als erste und zweite Halteelemente jeweilige Schneiden, zum Beispiel in Form von Schneidzähnen, auf. Beim Verpressen formen sich die Schneiden in die Außenfläche des jeweiligen Rohrendes ein und fixieren das Rohrende dadurch sicher in der jeweiligen Aufnahme.

Die zur axialen Mitte des Rohrverbinders weisende Schneidfläche der Schneiden weist vorzugsweise einen steileren Winkel zur axialen Achse auf als die von der axialen Mitte des Rohverbinders weg weisende Schneidfläche. Durch eine derart asymmetrische Schneide kann eine erhöhte erforderliche Auszugskraft in Richtung aus der jeweiligen Aufnahme heraus erreicht werden, während die Schneiden gleichzeitig mit breiterer Basis und damit robuster ausgebildet werden können.

Bei einer Ausführungsform weist der Rohrverbinder ein vorzugsweise hülsenförmiges Dichtelement auf, das sich zwischen den ersten Halteelementen und den zweiten Halteelementen vom Bereich der ersten Aufnahme zum Bereich der zweiten Aufnahme erstreckt und in radialer Richtung des Grundkörpers weiter innen angeordnet ist als die ein oder mehreren Brückenhalteelemente. Auf diese Weise kann der Übergang vom ersten Rohrende zum zweiten Rohrende im verpressten Zustand flüssigkeits- und/oder gasdicht abgedichtet werden, so dass eine dichte Rohrverbindung erreicht wird.

Das Dichtelement ist vorzugsweise aus einem Elastomer gebildet.

Wie zuvor beschrieben setzt sich der Grundkörper vorzugsweise aus mehreren Grundkörpersegmenten zusammen, wobei die Mehrzahl dieser Grundkörpersegmente dann in Summe die Mantelfläche des Grundkörpers ergibt. Das Dichtelement wird vorzugsweise innen in der durch die Grundkörpersegmente gebildeten Mantelfläche angeordnet, und zwar weiter innen als die vorzugsweise durch die Grundkörpersegmente getragenen Brückenhalteelemente. Insbesondere kann das Dichtelement innen an den Brückenhalteelementen anliegen.

Das Dichtelement weist vorzugsweise Dichtlippen im Bereich der ersten Aufnahme und/oder der zweiten Aufnahme auf. Auf diese Weise kann eine bessere Abdichtung zum ersten bzw. zweiten Rohrende erreicht werden.

Weitere Merkmale und Vorteile des Rohrverbinders, der Verwendung und des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1a-b: ein Rohrverbinder im unverpressten und verpressten Zustand,
- Fig. 2a-e: ein erstes Ausführungsbeispiel des Rohrverbinders in verschiedenen Ansichten sowie dessen Verwendung,
- Fig. 3a-e: ein zweites Ausführungsbeispiel des Rohrverbinders in verschiedenen Ansichten sowie dessen Verwendung,
- Fig. 4: ein Ausführungsbeispiel der Verwendung und des Verfahrens.

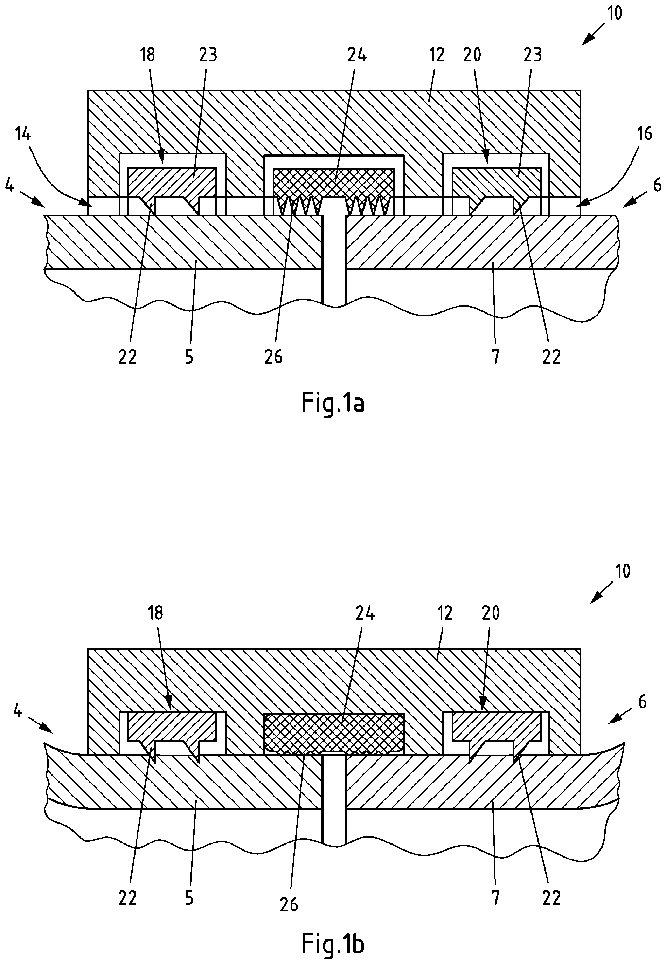

Die Fig. 1a-b zeigen, jeweils in schematischer Querschnittsteilansicht, einen als Pressverbinder ausgebildeten Rohrverbinder 10 zum Verbinden von zwei Rohrenden 4, 6 zweier Rohre 5, 7 aus dem Stand der Technik. Fig. 1a zeigt den Rohrverbinder 10 im unverpressten Zustand und Fig. 1b zeigt den Rohrverbinder 10 im verpressten Zustand.

Der Rohrverbinder 10 weist einen hülsenförmigen Grundkörper 12 mit einer ersten Aufnahme 14 für das erste Rohrende 4 und einer zweiten Aufnahme 16 für das zweite Rohrende 6 auf. In der ersten und zweiten Aufnahmen 14, 16 sind jeweilige Halteelemente 18, 20 in Form von mit Schneiden 22 versehenen Metallringen 23 angeordnet, wobei die Schneiden 22 beim Verpressen des Rohrverbinders 10 mit den Rohrenden 4, 6 in die jeweilige Außenfläche der Rohrenden 4, 6 eingeformt werden (s. Fig. 1b) und die Rohrenden 4, 6 auf diese Weise in den Aufnahmen 14, 16 fixieren.

Weiter weist der Rohrverbinder ein Dichtelement 24 mit Dichtlippen 26 auf, um den Übergang vom ersten Rohrende 4 zum zweiten Rohrende 6 abzudichten.

Wenn im verpressten Zustand (Fig. 1b) über eines der Rohrenden 4, 6 axiale Kräfte auf den Rohrverbinder 10 wirken, so müssen diese vom Grundkörper 12 aufgenommen werden, um auf das jeweilige andere Rohrende übertragen zu werden. Damit der Grundkörper 12 zum Beispiel bei Erdverlegung typischerweise auftretende Kräfte aufnehmen kann, muss dieser mit einer relativ dicken Wandstärke ausgebildet werden. Dies führt zu einem hohen erforderlichen Materialeinsatz für den Grundkörper 12 und weiterhin dazu, dass sehr hohe Presskräfte erforderlich werden, um den Grundkörper 12 mit der großen Wanddicke zu verpressen. Daher ist ein Rohrverbinder, wie er in Fig. 1a-b dargestellt ist, insbesondere für große Rohrquerschnitte bzw. für Einbausituationen mit potentiell großen auftretenden axialen Kräften, nicht gut geeignet.

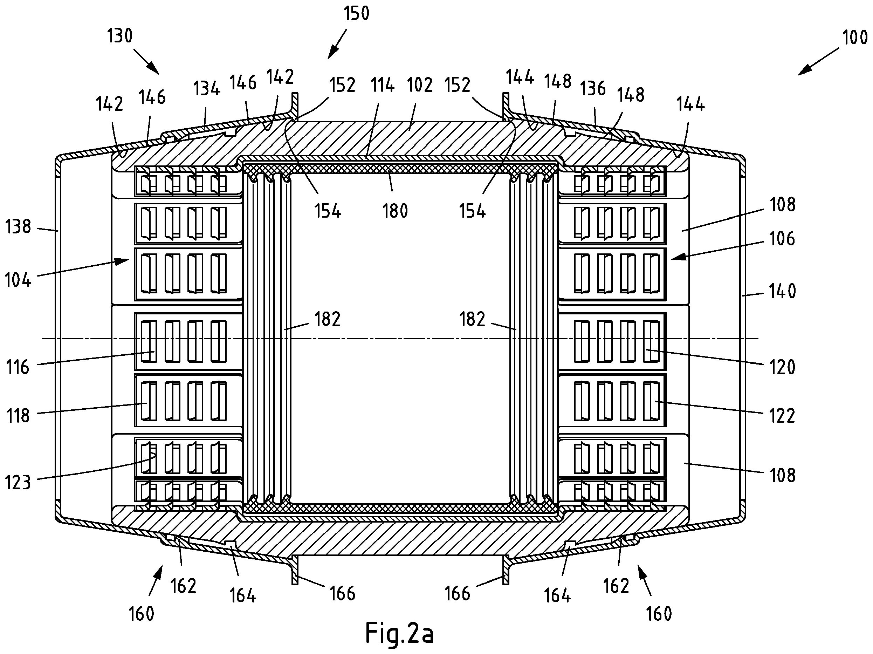

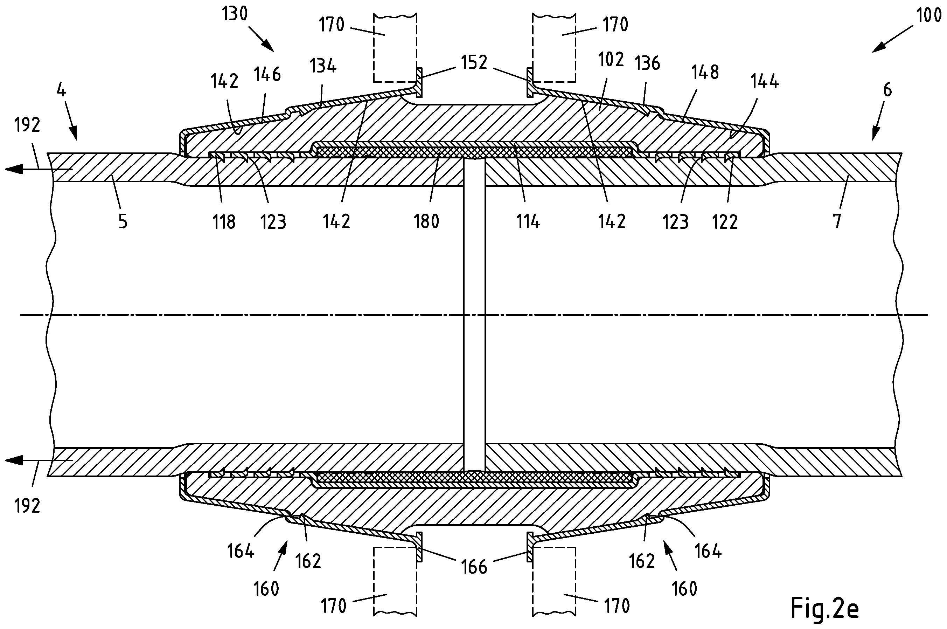

Die Fig. 2a-e zeigen ein erstes Ausführungsbeispiel des Rohrverbinders zum dichten Verbinden eines ersten Rohrendes mit einem zweiten Rohrende in verschiedenen Ansichten, und zwar im unverpressten Zustand (Fig. 2a-d) sowie im verpressten Zustand (Fig. 2e).

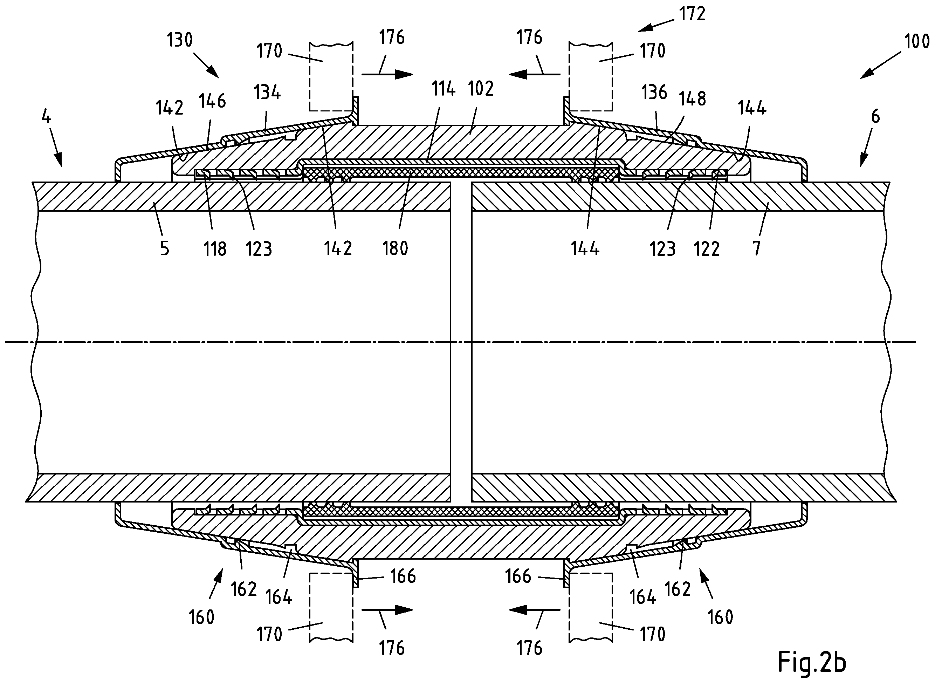

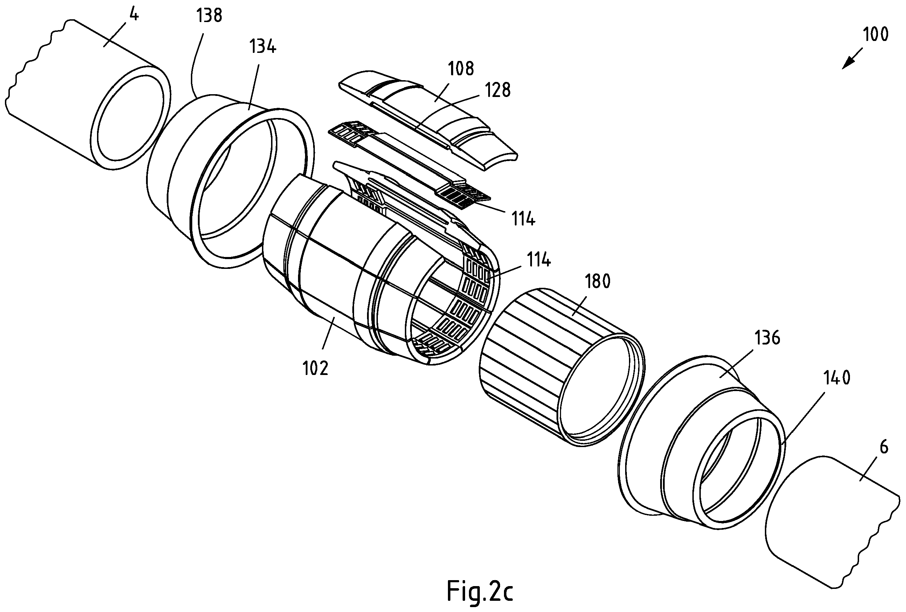

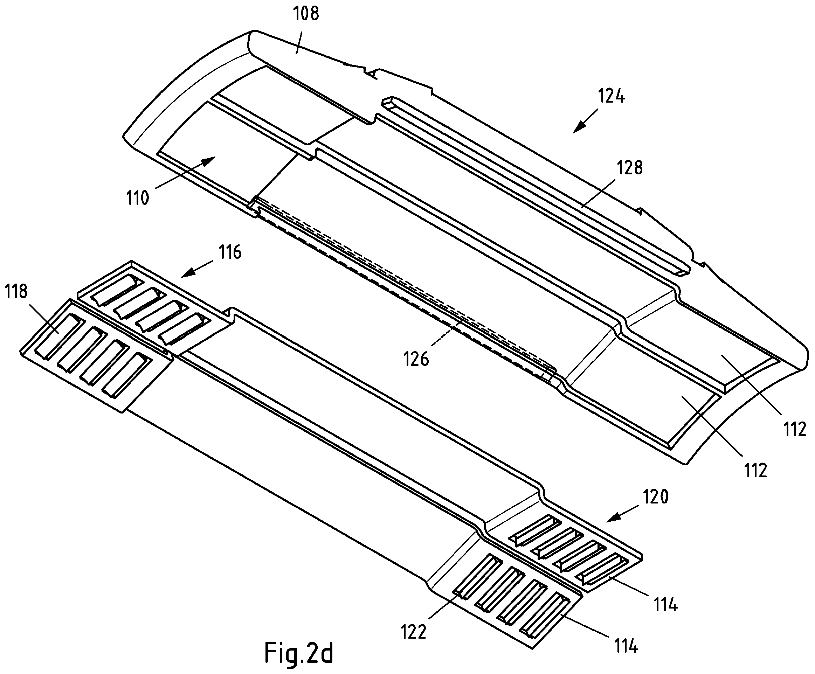

Fig. 2a zeigt eine schematische Schnittansicht des Rohrverbinders 100 im unverpressten Zustand. Fig. 2b zeigt die Ansicht aus Fig. 2a mit in den Rohrverbinder 100 eingeführten Rohrenden 4, 6. Fig. 2c zeigt eine schematische, perspektivische Explosionsdarstellung des Rohrverbinders 100. Fig. 2d zeigt eine perspektivische Detailansicht eines Grundkörpersegments 108 und zweier Brückenhalteelemente 114. Fig. 2e zeigt die Ansicht aus Fig. 2b im verpressten Zustand.

Der Rohrverbinder 100 weist einen hülsenartigen Grundkörper 102 aus Kunststoff auf, der eine erste Aufnahme 104 zum Einführen eines ersten Rohrendes 4 eines ersten Rohres 5 und eine der ersten Aufnahme 104 gegenüberliegende zweite Aufnahme 106 zum Einführen eines zweiten Rohrendes 6 eines zweiten Rohres 7 aufweist.

Der Grundkörper 102 ist aus mehreren gleichartigen Grundkörpersegmenten 108 gebildet, im vorliegenden Ausführungsbeispiel zum Beispiel aus acht Grundkörpersegmenten 108, die in Umfangsrichtung nebeneinander angeordnet sind.

Fig. 2d zeigt ein solches Grundkörpersegment 108 in perspektivischer Ansicht. Das Grundkörpersegment 108 weist auf der Innenseite 110 zwei Aufnahmen 112 für ein jeweiliges Brückenhalteelement 114 auf, die in Fig. 2d ebenfalls dargestellt sind. Jedes der Brückenhalteelemente 114 erstreckt sich vom Bereich der ersten Aufnahme 104 zum Bereich der zweiten Aufnahme 106 und bildet im Bereich der ersten Aufnahme 104 erste Halteelemente 116 in Form mehrerer Schneiden 118 und im Bereich der zweiten Aufnahme 106 zweite Halteelemente 120 in Form mehrerer Schneiden 122. Die Brückenhalteelemente 114 können zum Beispiel aus Metall oder faserverstärktem Kunststoff gebildet sein und weisen vorzugsweise eine höhere Zugfestigkeit Rₘ und/oder eine höhere Streckgrenze R_{p0,2} auf als das Grundkörpersegment 108 bzw. der Grundkörper 102.

Die Brückenhalteelemente 114 sind vorliegend jeweils einteilig ausgebildet und können auf eines der Halteelemente 116, 120 einwirkende Zugkräfte auf das jeweilige andere Halteelemente 120, 116 übertragen. Die Brückenhalteelemente 114 erstrecken sich also zugkraftübertragend vom Bereich der ersten Aufnahme 104 zum Bereich der zweiten Aufnahme 106.

Die Grundkörpersegmente 108 weisen an ihren einander zugewandten Seiten Ausrichtungsmittel 124 in Form einer jeweiligen Nut 126 und eine jeweils korrespondierenden Feder 128 auf, wobei die Feder 128 eines Grundkörpersegments 108 in die Nut 126 eines benachbarten Grundkörpersegments 108 eingreift und damit deren Position zueinander ausrichtet.

Der Rohrverbinder 100 weist weiter ein Gehäuse 130 aus zwei axial zueinander versetzten Gehäuseteilen 134, 136 auf, wobei das erste Gehäuseteil 134 den Grundkörper 102 im Bereich der ersten Aufnahme 104 und das zweite Gehäuseteil 136 den Grundkörper 102 im Bereich der zweiten Aufnahme 106 schalenartig umgibt. Das Gehäuse 130 kann beispielsweise aus Metall oder Kunststoff, insbesondere faserverstärktem Kunststoff bestehen.

Die Gehäuseteile 134, 136 sind jeweils hülsenartig mit einer jeweiligen Gehäuseöffnung 138, 140 zum Einführen eines jeweiligen Rohrendes 4, 6 in die erste bzw. zweite Aufnahme 104, 106 ausgebildet.

Weiter weisen die Gehäuseteile 134, 136 jeweilige schräge, kegelstumpfflächenartige Gleitflächen 142, 144 auf, die zu jeweiligen schrägen, kegelstumpfflächenartigen Pressflächen 146, 148 auf der Außenseite des Grundkörpers 102 korrespondieren.

Weiter weisen die Gehäuseteile 134, 136 und der Grundkörper 102 zueinander korrespondierende erste Rastmittel 150 in Form von Rasthaken 152 und korrespondierenden Hinterschneidungen 154 auf, um die Gehäuseteile 134, 136 im unverpressten Zustand (Fig. 2a) in einer Ausgangsposition zu halten. Auf diese Weise werden die Gehäuseteile 134, 136 unverlierbar auf dem Grundkörper 102 und die einzelnen Grundkörpersegmente 108 des Grundkörpers 102 zusammengehalten.

Darüber hinaus weisen die Gehäuseteile 134, 136 und der Grundkörper 102 zueinander korrespondierende zweite Rastmittel 160 in Form von Rasthaken 162 und korrespondierenden Hinterschneidungen 164 auf, um die Gehäuseteile 134, 136 im verpressten Zustand (Fig. 2e) in einer Verpressposition zu halten.

An den Gehäuseteilen 134, 136 sind zudem jeweilige Ansätze 166 für Pressbacken 170 eines Presswerkzeugs 172 (in Fig. 2b durch gestrichelte Linien angedeutet) vorgesehen.

Der Rohrverbinder 100 weist weiter ein hülsenförmiges Dichtelement 180 auf, das sich zwischen den ersten Halteelementen 116 und den zweiten Halteelementen 120 der Brückenhalteelemente 114 vom Bereich der ersten Aufnahme 104 zum Bereich der zweiten Aufnahme 106 erstreckt und radial in Bezug auf den Grundkörper 102 innerhalb der Brückenhalteelemente 114 angeordnet ist. In der Explosionsdarstellung in Fig. 2c ist das Dichtelement 180 der besseren Darstellung halber axial aus dem Grundkörper 102 heraus verschoben. Das Dichtelement 180 weist im Bereich der ersten Aufnahme 104 und im Bereich der zweiten Aufnahme 106 jeweils nach Innen gerichtete Dichtlippen 182 zur Abdichtung gegen die Außenfläche des entsprechenden Rohrendes 4, 6, im verpressten Zustand auf.

Im Folgenden wird die Verwendung des Rohrverbinders 100 zum dichten Verbinden zweier Rohrenden 4, 6 beschrieben.

Um mit dem Rohrverbinder 100 zwei Rohrenden 4, 6 miteinander zu verbinden, werden die Rohrenden 4, 6 wie in Fig. 2b dargestellt durch die jeweilige Gehäuseöffnung 138, 140 in die jeweilige Aufnahme 104, 106 des Rohrverbinders 100 eingeführt. Anschließend werden die Pressbacken 170 eines Presswerkzeugs 172 wie in Fig. 2b angedeutet an den Ansätzen 166 der Gehäuseteile 134, 136 des Rohrverbinders 100 angesetzt.

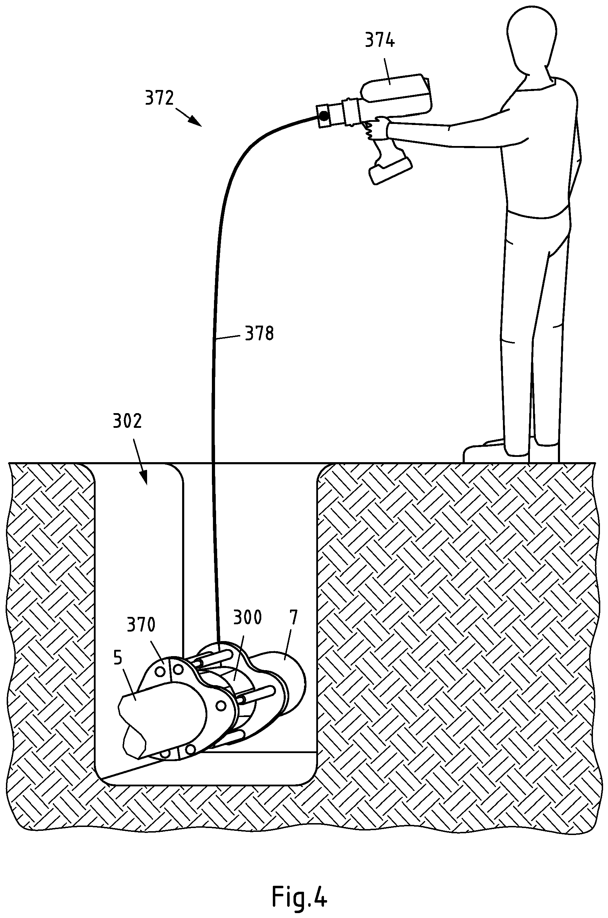

Die Pressbacken 170 des Presswerkzeugs 170 können mechanisch oder auch hydraulisch mittels eines Pressbackenaktuators (s. Bezugszeichen 374 in Fig. 4) des Presswerkzeugs 170 axial aufeinander zu bewegt werden (s. Pfeile 176 in Fig. 2b), so dass die beiden Gehäuseteile 134, 136 aufeinander zu bewegt werden. Bei dieser Bewegung gleiten die schrägen Gleitflächen 142, 144 über die korrespondierenden Pressflächen 146, 148 des Grundköpers 102, wodurch die von den Pressbacken 170 auf die Gehäuseteile 134, 136 ausgeübten axialen Presskräfte teilweise in radiale Presskräfte auf den Grundkörper 102 umgeleitet werden, wodurch dieser in radialer Richtung verpresst wird.

Beim Verpressen des Grundkörpers 102 werden die Grundkörpersegmente 108 kalt verformt, wodurch sich im unverpressten Zustand etwaig vorhandene Zwischenräume zwischen den einzelnen Grundkörpersegmenten 108 schließen und der Grundkörper radial nach Innen verformt wird, wodurch die Schneiden 118, 122 der Brückenhalteelemente 114 in die Außenfläche der Rohrenden 4, 6 eingeformt werden und diese damit formschlüssig in der jeweiligen Aufnahme 104, 106 fixieren.

Die Schneiden 118, 122 der Brückenhalteelemente 114 sind asymmetrisch mit einem steileren Winkel der zur Mitte des Rohrverbinders 100 weisenden Schneidfläche 123, um die Auszugskraft zu erhöhen, die zum Herausziehen der Rohrenden 4, 6 aus den Aufnahmen 104, 106 erforderlich wäre.

Weiterhin wird das Dichtelement 180 mit den Dichtlippen 182 gegen die Außenfläche der Rohrenden 4, 6 gedrückt und dichtet die Verbindung zwischen den Rohrenden gas- und/oder flüssigkeitsdicht ab.

Am Ende des Pressvorgangs rasten die Rasthaken 162 der Gehäuseteile 134, 136 in die korrespondierenden Hinterscheidungen 164 des Grundkörpers 102 ein, so dass die Gehäuseteile 134, 136 in der verpressten Position fixiert werden und eine Rückverformung des Grundkörpers 102 aus dem verpressten Zustand verhindern.

Der verpresste Zustand des Rohrverbinders 100 ist in Fig. 2e dargestellt.

Der fertig verpresste Rohrverbinder 100 bewirkt eine langlebige und dichte Rohrverbindung 190 der beiden Rohrenden 4, 6, und zwar auch beim Auftreten axialer Kräfte auf die Rohrverbindung. Wirkt zum Beispiel eine axiale Kraft (Pfeil 192) auf das erste Rohrende 4, zum Beispiel durch Montagearbeiten im weiteren Rohrverlauf oder plötzliche Mediendruckstöße im Betrieb, so wird diese axiale Kraft über die ersten Halteelemente 116 in die Brückenhalteelemente 114 eingeleitet und über die zweiten Halteelemente 120 auf das zweite Rohrende 6 übertragen. Auf diese Weise wird verhindert, dass die axiale Kraft die Rohrverbindung 190 schwächt oder undicht werden lässt. Da die auftretenden axialen Kräfte über die Brückenhalteelemente 114 geleitet werden, kann die Wanddicke des Grundkörpers 102 (zum Beispiel im Vergleich zum Rohrverbinder 10) geringer dimensioniert werden, wodurch Material und Gewicht eingespart werden und ein insgesamt kompakterer Pressverbinder 100 zur Verfügung gestellt werden kann.

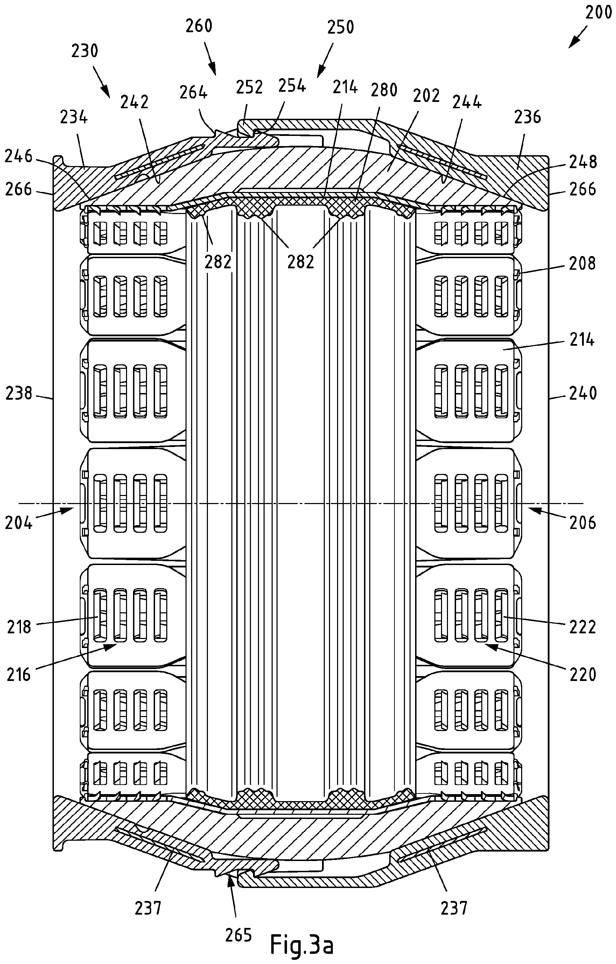

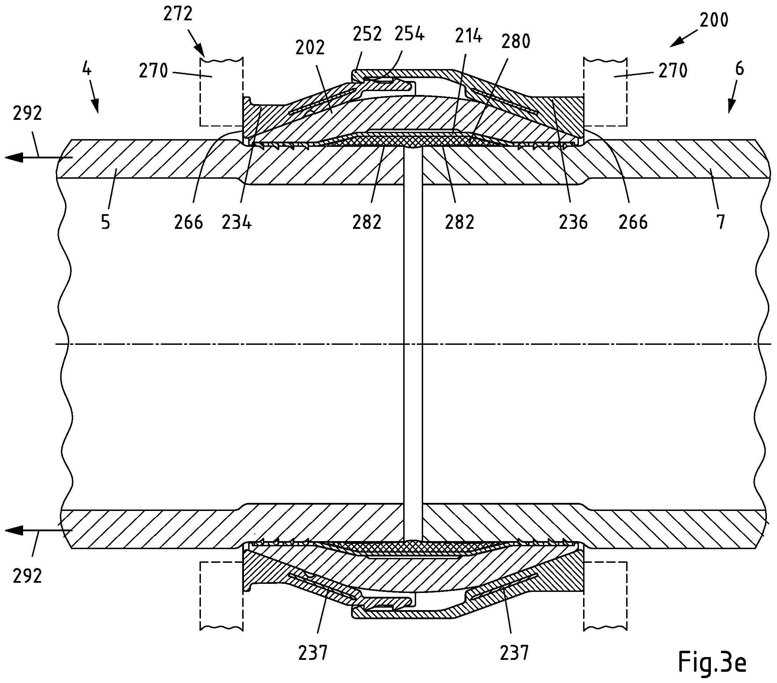

Die Fig. 3a-e zeigen ein zweites Ausführungsbeispiel des Rohrverbinders zum dichten Verbinden eines ersten Rohrendes mit einem zweiten Rohrende in verschiedenen Ansichten, und zwar im unverpressten Zustand (Fig. 3a-d) sowie im verpressten Zustand (Fig. 3e).

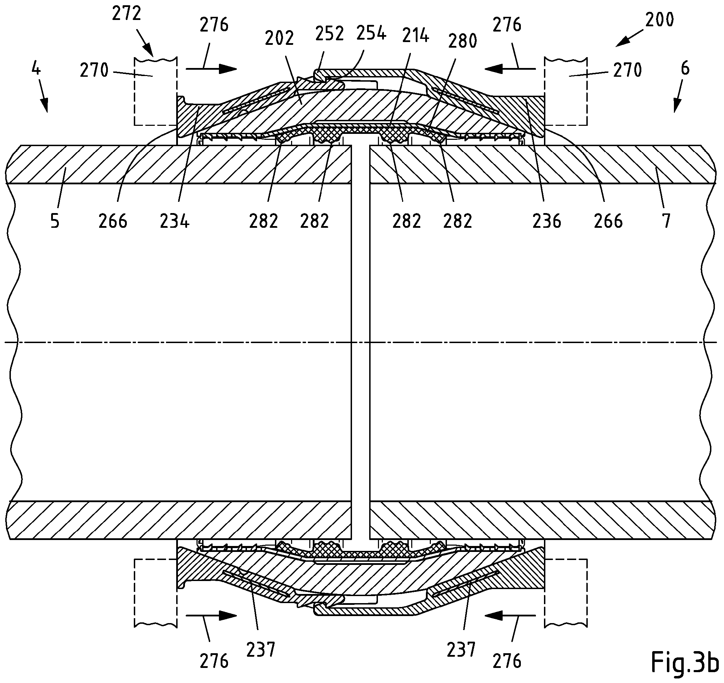

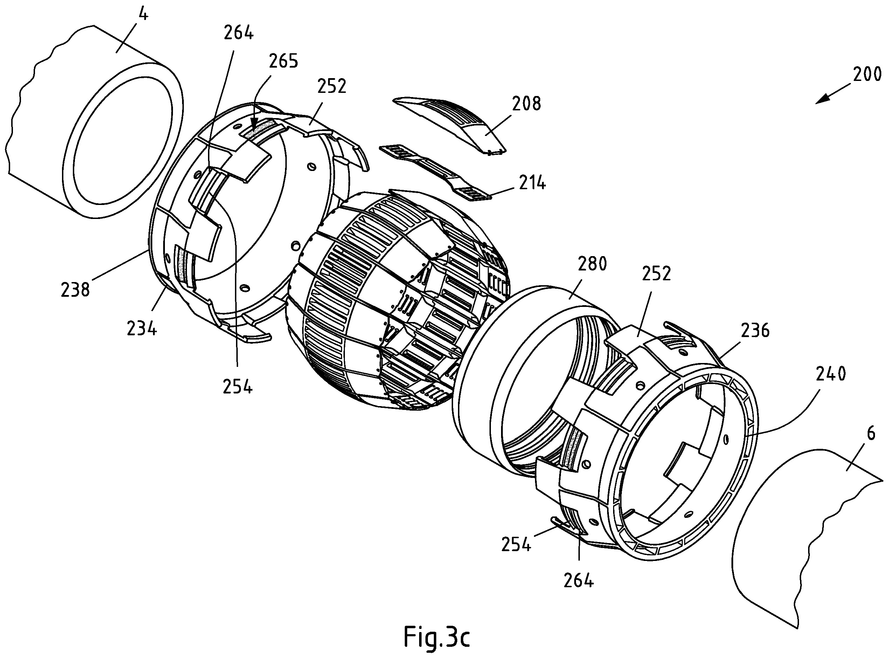

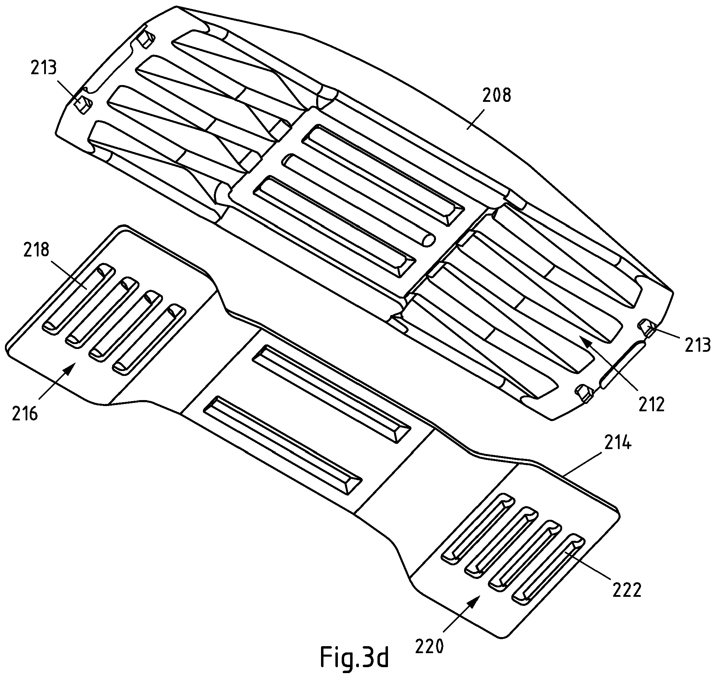

Fig. 3a zeigt eine schematische Schnittansicht des Rohrverbinders 200 im unverpressten Zustand. Fig. 3b zeigt die Ansicht aus Fig. 3a mit in den Rohrverbinder 200 eingeführten Rohrenden 4, 6. Fig. 3c zeigt eine schematische, perspektivische Explosionsdarstellung des Rohrverbinders 200. Fig. 3d zeigt eine perspektivische Detailansicht eines Grundkörpersegments 208 und eines Brückenhalteelements 214 des Rohrverbinders 200. Fig. 3e zeigt die Ansicht aus Fig. 3b im verpressten Zustand.

Der Rohrverbinder 200 weist grundsätzlich einen ähnlichen Aufbau auf wie der Rohrverbinder 100.

Insbesondere umfasst der Rohrverbinder 200 ebenfalls einen hülsenartigen Grundkörper 202, der aus mehreren Grundkörpersegmenten 208, im vorliegenden Beispiel zwölf Grundkörpersegmenten 208, gebildet wird und einer erste Aufnahme 204 für ein erstes Rohrende 4 und eine gegenüberliegende zweite Aufnahme 206 für ein zweites Rohrende 6 aufweist. Die Grundkörpersegmente 208 weisen auf der Innenseite jeweils eine Aufnahme 212 mit Rasthaken 213 auf, in die jeweils ein Brückenhalteelement 214 einsetzt ist und durch die Rasthaken 213 fixiert wird. Die Brückenhalteelemente 214 erstrecken sich jeweils vom Bereich der ersten Aufnahme 204 zum Bereich der zweiten Aufnahme 206 und weisen erste und zweite Halteelemente 216, 220 in Form von am Brückenhalteelement 214 vorgesehenen Schneiden 218, 222 auf.

Der Rohrverbinder 200 weist weiter ein Gehäuse 230 mit zwei axial zueinander versetzten, hülsenförmigen Gehäuseteilen 234, 236 auf, die den Grundkörper 202 jeweils im Bereich der ersten Aufnahme 204 bzw. der zweiten Aufnahme 206 umgeben und jeweilige Gehäuseöffnungen 238, 240 zum Einführen eines Rohrendes 4, 6 in die Aufnahmen 204, 206 aufweisen. Die Gehäuseteile 234, 236 sind aus Kunststoff gefertigt mit einer jeweiligen Einlage 237 aus Metall zur Verstärkung.

Die Gehäuseteile 234, 236 weisen jeweils schräge, kegelsegmentflächenförmige Gleitflächen 242, 244 auf, die zu jeweiligen schrägen kegelsegmentflächenförmigen Pressflächen 246, 248 auf der Außenseite des Grundkörpers 202 korrespondieren. Weiterhin weisen die Gehäuseteile 234, 236 zueinander korrespondierende erste Rastmittel 250 in Form von Rasthaken 252 und korrespondierenden Hinterschneidungen 254 auf, um die Gehäuseteile 234, 236 im unverpressten Zustand (Fig. 3a) in einer Ausgangsposition zu halten. Weiter weisen die Gehäuseteile 234, 236 zueinander korrespondierende zweite Rastmittel 260 in Form der Rasthaken 252 und weiteren korrespondierenden Hinterschneidungen 264 auf, um die Gehäuseteile 234, 236 im verpressten Zustand (Fig. 3e) in einer Verpressposition zu halten. Weiter weisen die Gehäuseteile 234, 236 jeweilige Ansätze 266 für Pressbacken 270 eines Presswerkzeugs 272 (in Fig. 2b durch gestrichelte Linien angedeutet) auf.

Der Rohrverbinder 200 weist weiter ein sich zwischen den Halteelementen 216, 220 der Brückenhalteelemente 214 und radial erstreckendes Dichtelement 280 auf, das radial weiter innen angeordnet ist als die Brückenhalteelemente 214 und im Bereich der ersten und zweiten Aufnahme 204, 206 Dichtlippen 282 aufweist.

Der Verpressvorgang erfolgt ähnlich wie beim Rohrverbinder 200. Nach dem Einführen der Rohrenden 4, 6 in die Aufnahmen 204, 206 wird mit den Pressbacken 270 des Presswerkzeugs 272 ein axiale Presskraft (Pfeile 276) auf die Gehäuseteile 234, 236 ausgeübt, so dass diese aufeinander zu bewegt werden. Durch die Wechselwirkung der Gleitflächen 242, 244 mit den Pressflächen 246, 248 wird die axiale Presskraft teilweise in eine radiale Presskraft auf den Grundkörper 202 umgeleitet, so dass die Grundkörpersegmente 208 kalt verformt werden, wodurch sich im unverpressten Zustand etwaig vorhandende Zwischenräume zwischen den einzelnen Grundkörpersegmenten 208 schließen und der Grundkörper 202 radial nach Innen verformt wird, wodurch die Schneiden 218, 222 der Brückenhalteelemente 214 in die Außenflächen der Rohrenden 4, 6 eingeformt werden und diese damit in der jeweiligen Aufnahme 204, 206 fixieren. Die beim Verpressvorgang gegen die Außenflächen der Rohrenden 4, 6 gedrückten Dichtlippen 282 des Dichtelements 280 dichten die Verbindung der Rohrenden 4, 6 ab. Am Ende des Pressvorgangs rasten die Rasthaken 252 hinter die Hinterschneidungen 264 ein und fixieren die Gehäuseteile 234, 236 in der Verpressposition.

Es kann eine Verpresst-Kennzeichnung 265 vorgesehen sein, die den verpressten Zustand der Gehäuseteile 234, 236 anzeigt. Auf diese Weise kann das Erreichen der Verpressposition 265 überprüft werden. Beispielsweise kann als Verpresst-Kennzeichnung das Gehäuseteil 234 im Bereich der Pressmittel 250, 260 zwischen den Hinterschneidungen 254 und 264 mit einer farblichen Kennzeichnung versehen sein, die in der in Fig. 3a gezeigten unverpressten Position von außen sichtbar ist und in der in Fig. 3e gezeigten Verpressposition von den Rasthaken 252 des Gehäuseteils 236 abgedeckt und damit von außen nicht sichtbar ist.

Der fertig verpresste Rohrverbinder 200 bewirkt eine langlebige und dichte Rohrverbindung 290 der beiden Rohrenden 4, 6, und zwar auch beim Auftreten axialer Kräfte auf die Rohrverbindung. Wirkt zum Beispiel eine axiale Kraft (Pfeil 292) auf das erste Rohrende 4, so wird diese axiale Kraft über die ersten Halteelemente 216 in die Brückenhalteelemente 214 eingeleitet und über die zweiten Halteelemente 220 auf das zweite Rohrende 6 übertragen. Auf diese Weise wird verhindert, dass die axiale Kraft die Rohrverbindung 290 schwächt oder undicht werden lässt. Da die auftretenden axialen Kräfte über die Brückenhalteelemente 214 geleitet werden, kann die Wanddicke des Grundkörpers 202 (zum Beispiel im Vergleich zum Rohrverbinder 10) geringer dimensioniert werden, wodurch Material und Gewicht eingespart werden und ein insgesamt kompakterer Pressverbinder 200 zur Verfügung gestellt werden kann.

Fig. 4 zeigt eine beispielhafte Montagesituation bei der Verbindung der Rohrenden 4, 6 zweier erdverlegter Rohre 5, 7 mit einem Rohrverbinder 300, der zum Beispiel wie der Rohrverbinder 100 oder wie der Rohrverbinder 200 ausgebildet sein kann, in einer Grube 302.

Zur Herstellung der Pressverbindung werden die Rohrenden 4, 6 (analog zu Fig. 2b und 3b) in den Rohrverbinder 200 eingeführt und die Pressbacken 370 eines Presswerkzeugs 372 (s. Pressbacken 170 in Fig. 2b bzw. Pressbacken 270 in Fig. 3b) an den entsprechenden Ansätzen (s. Ansätze 166 in Fig. 2b bzw. Ansätze 266 in Fig. 3b) des Rohrverbinders 200 angesetzt. Über einen Pressbackenaktuator 374, der in Fig. 4 über eine hydraulische Leitung 378 mit den Pressbacken 370 verbunden ist, kann eine Presskraft (s. Pfeile 176 in Fig. 1b und 2b) auf den Rohrverbinder 200 ausgeübt werden, um diesen zu verpressen. Die hydraulische Leitung 378 ermöglicht eine bequeme Betätigung des Pressbackenaktuator 374 von außerhalb der Grube 302.

### Bezugszeichenliste:

- 4: erstes Rohrende
- 5: erstes Rohr
- 6: zweiten Rohrende
- 7: zweites Rohr
- 10: Rohrverbinder
- 12: Grundkörper
- 14: erste Aufnahme
- 16: zweite Aufnahme
- 18, 20: Halteelemente
- 22: Schneide
- 23: Metallring
- 24: Dichtelement
- 26: Dichtlippen
- 100, 200, 300: Rohrverbinder
- 102, 202: Grundkörper
- 104, 204: erste Aufnahme
- 106, 206: zweite Aufnahme
- 108,208: Grundkörpersegment
- 110: Innenseite
- 112, 212: Aufnahme für ein Brückenhalteelement
- 114,214: Brückenhalteelement
- 116, 216: erstes Halteelement
- 118, 122, 218, 222: Schneiden
- 120, 220: zweites Halteelement
- 123: Schneidfläche
- 124: Ausrichtungsmittel
- 126: Nut
- 128: Feder
- 130,230: Gehäuse
- 134, 234: erstes Gehäuseteil
- 136, 236: zweite Gehäuseteil
- 138, 238: erste Gehäuseöffnung
- 140, 240: zweite Gehäuseöffnung
- 142, 144, 242, 244: Gleitflächen
- 146, 148, 246, 248: Pressflächen
- 150, 250: erste Rastmittel
- 152, 162, 252: Rasthaken
- 154, 164, 254, 264: Hinterschneidungen
- 160, 260: zweite Rastmittel
- 166, 266: Ansätze für Pressbacken
- 170, 270, 370: Pressbacken
- 172, 272, 372: Presswerkzeug
- 176, 276: axiale Presskraft
- 180, 280: Dichtelement
- 182, 282: Dichtlippen
- 190, 290: Rohrverbindung
- 192, 292: axiale Kraft
- 213: Rasthaken
- 237: Einlage
- 265: Verpresst-Kennzeichnung
- 302: Grube
- 374: Pressbackenaktuator
- 378: Leitung

## Patentansprüche

1. Rohrverbinder (100, 200, 300) zum dichten Verbinden eines ersten Rohrendes (4) mit einem zweiten Rohrende (6),
- mit einem hülsenartigen Grundkörper (102, 202), der eine erste Aufnahme (104, 204) zum Einführen eines ersten Rohrendes (4) und eine zweite Aufnahme (106, 206) zum Einführen eines zweiten Rohrendes (6) aufweist,
- mit ersten Halteelementen (116, 216) im Bereich der ersten Aufnahme (104, 204), die dazu ausgebildet sind, ein in die erste Aufnahme (104, 204) eingeführtes erstes Rohrende (4) nach einem Verpressen des Rohrverbinders (100, 200, 300) in der ersten Aufnahme (104, 204) zu fixieren, und
- mit zweiten Halteelementen (120, 220) im Bereich der zweiten Aufnahme (106, 206), die dazu ausgebildet sind, ein in die zweite Aufnahme (106, 206) eingeführtes zweites Rohrende (6) nach dem Verpressen des Rohrverbinders (100, 200, 300) in der zweiten Aufnahme (106, 206) zu fixieren,
**dadurch gekennzeichnet,**
- **dass** ein oder mehrere Brückenhalteelemente (114, 214) vorgesehen sind, wobei sich ein Brückenhalteelement (114, 214) jeweils vom Bereich der ersten Aufnahme (104, 204) zum Bereich der zweiten Aufnahme (106, 206) erstreckt und mindestens eines der ersten Halteelemente (116, 216) und mindestens eines der zweiten Halteelemente (120, 220) bildet.

2. Rohrverbinder nach Anspruch 1,
**dadurch gekennzeichnet, dass** der Grundkörper (102, 202) aus mehreren in Umfangsrichtung nebeneinander angeordneten Grundkörpersegmenten (108, 208) gebildet wird.

3. Rohrverbinder nach Anspruch 2,
**dadurch gekennzeichnet, dass** ein oder mehrere der Grundkörpersegmente (108, 208) Ausrichtungsmittel (124) aufweisen, um benachbarte Grundkörpersegmente (108, 208) zueinander auszurichten.

4. Rohrverbinder nach Anspruch 2 oder 3,
**dadurch gekennzeichnet, dass** ein oder mehrere der Grundkörpersegmente (108, 208) ein oder mehrere Aufnahmen (112, 212) für ein jeweiliges Brückenhalteelement (114, 214) aufweisen.

5. Rohrverbinder nach einem der Ansprüche 1 bis 4,
**dadurch gekennzeichnet, dass** der Rohrverbinder (100, 200, 300) ein den Grundkörper (102, 202) zumindest teilweise umgebendes, vorzugsweise hülsenartiges, Gehäuse (130, 230) aufweist, wobei das Gehäuse (130, 230) eine erste Gehäuseöffnung (138, 238) zum Einführen eines ersten Rohrendes (4) in die erste Aufnahme (104, 204) und eine zweite Gehäuseöffnung (140, 240) zum Einführen eines zweiten Rohrendes (6) in die zweite Aufnahme (106, 206) aufweist.

6. Rohrverbinder nach Anspruch 5,
**dadurch gekennzeichnet, dass** das Gehäuse (130, 230) mehrere Gehäuseteile (134, 136, 234, 236) aufweist, die zu jeweiligen Pressflächen (146, 148, 246, 248) des Grundkörpers (102, 202) korrespondierende Gleitflächen (142, 144, 242, 244) aufweisen, so dass eine mittels eines Presswerkzeugs (172, 272, 372) auf die Gehäuseteile (134, 136, 234, 238) ausgeübte axiale Presskraft (176, 276) eine radiale Presskraft auf den Grundkörper (102, 202) bewirkt.

7. Rohrverbinder nach Anspruch 6,
**dadurch gekennzeichnet, dass** die Gehäuseteile (134, 136, 234, 236) untereinander und/oder die Gehäuseteile (134, 136, 234, 236) und der Grundkörper (102, 202) zueinander korrespondierende Rastmittel (150, 160, 150, 250, 260) aufweisen, um die Gehäuseteile (134, 136, 234, 236) im unverpressten und/oder verpressten Zustand zu verrasten.

8. Rohrverbinder nach Anspruch 6 oder 7,
**dadurch gekennzeichnet, dass** eine Verpresst-Kennzeichnung vorgesehen ist, die den verpressten Zustand des Rohrverbinders (100, 200, 300) anzeigt, insbesondere eine farbliche Kennzeichnung an einem der Gehäuseteile (134, 136, 234, 236) im Bereich der korrespondierenden Rastmittel (150, 160, 150, 250, 260).

9. Rohrverbinder nach einem der Ansprüche 1 bis 8,
**dadurch gekennzeichnet, dass** die ein oder mehreren Brückenhalteelemente (114, 214) eine höhere Zugfestigkeit und/oder höhere Streckgrenze aufweisen als der Grundkörper (102, 202).

10. Rohrverbinder nach einem der Ansprüche 1 bis 9,
**dadurch gekennzeichnet, dass** die ein oder mehreren Brückenhalteelemente (114, 214) einteilig ausgebildet sind.

11. Rohrverbinder nach einem der Ansprüche 1 bis 10,
**dadurch gekennzeichnet, dass** die ein oder mehreren Brückenhalteelemente (114, 214) als erste und zweite Halteelemente (116, 120, 216, 220) jeweilige Schneiden (118, 122, 218, 222) aufweisen, wobei die zur axialen Mitte des Rohrverbinders weisende Schneidfläche der Schneiden (118, 122, 218, 222) vorzugsweise einen steileren Winkel zur axialen Achse aufweist als die von der axialen Mitte des Rohverbinders wegweisende Schneidfläche.

12. Rohrverbinder nach einem der Ansprüche 1 bis 11,
**dadurch gekennzeichnet, dass** der Rohrverbinder (100, 200, 300) ein hülsenförmiges Dichtelement (180, 280) aufweist, dass sich zwischen den ersten Halteelementen (116, 216) und den zweiten Halteelementen (120, 220) vom Bereich der ersten Aufnahme (104, 204) zum Bereich der zweiten Aufnahme (106, 206) erstreckt und in radialer Richtung des Grundkörpers (102, 202) weiter innen angeordnet ist als die ein oder mehreren Brückenhalteelemente (114, 214).

13. Verwendung eines Rohrverbinders (100, 200, 300) nach einem der Ansprüche 1 bis 12 zum Verbinden eines ersten Rohrendes (4) und eines zweiten Rohrendes (6), insbesondere von Rohren (5, 7) aus nachgiebigem Werkstoff, vorzugsweise Kunststoffrohren.

14. Verfahren zum dichten Verbinden eines ersten Rohrendes (4) mit einem zweiten Rohrende (6),
- bei dem ein erstes Rohrende (4) in die erste Aufnahme (104, 204) eines Rohrverbinders (100, 200, 300) nach einem der Ansprüche 1 bis 12 eingeführt wird,
- bei dem ein zweites Rohrende (6) in die zweite Aufnahme (106, 206) des Rohrverbinders (100, 200, 300) eingeführt wird und
- bei dem der Rohrverbinder (100, 200, 300) derart verpresst wird, dass das erste Rohrende (4) durch die ersten Halteelemente (116, 216) in der ersten Aufnahme (104, 204) fixiert wird und das zweite Rohrende (6) durch die zweiten Halteelemente (120, 220) in der zweiten Aufnahme (106, 206) fixiert wird.
